# EUROPEAN PATENT APPLICATION

(11) **EP 1 000 957 A1**
(43) Date of publication of application: **17.05.2000**
(21) Application number: 99308909.3
(22) Date of filing: 09.11.1999
(51) Int. Cl.: C08G 59/54, C09D 163/00

(54) **Weather resistant polymeric coating system**

(30) Priority: 11.11.1998 US 189666
(71) Applicant: ILLINOIS TOOL WORKS INC., Glenview, Illinois 60025 (US)
(72) Inventor: Robinson, David P., Roseland, New Jersey 07068 (US)
(74) Representative: Boff, James Charles

(57) **Abstract**

The present invention relates to a curable epoxy coating system suitable for use in applications where it will be exposed to ultraviolet radiation and moisture, such as on naval and marine flight decks. The epoxy coating system of the present invention contains an epoxy component containing a substantially nonaromatic epoxy polymer and a hardener component containing primarily secondary and/or tertiary amines. The aromaticity of the epoxy polymer and the content of primary amine in the hardener are limited to provide a coating that, after curing, does not undergo "chalking" or blushing, is chemically and mechanically stable, is thick enough to immobilize nonslip aggregates, and tough enough to withstand long term naval and marine aircraft flight deck operations.

## Description

The present invention relates to weather-resistant polymeric coating systems suitable for use in naval and other marine applications, as well as for any other applications requiring surfaces that are hard-wearing, weather resistant, and resistant to degradation by radiation, in particular ultraviolet radiation. The invention also relates to coating compositions formed by curing such weather-resistant polymeric coating systems. The coatings are useful in particular in providing durable, non-slip surfaces.

Weather resistant resin coatings have been sought for many years, mainly to protect the underlying surfaces from corrosion and other damage, and also to provide an aesthetic or utilitarian colour to the coated object. Highly weather resistant, light stable resin coating systems using acrylics, silicones, urethanes, and fluoropolymers have been used for many years in the tank coating industry (e.g., coating water tanks, railroad tankers, oil refinery and natural gas refinery storage tanks, etc.), transit industries (e.g., railcars, aircraft, etc.), and architectural and construction industries (e.g., buildings, roofing, signs, etc.). These systems tend, however, to form low film thicknesses of around 2 to 8 mils.
In certain applications, another function of the coating is to provide a non-slip surface under wet conditions. For example, it is generally desirable that coatings used on deck surfaces on naval vessels and in other marine applications provide a wearable, non-slip surface. In particular, flight decks of naval aircraft carriers must have surfaces that are extremely resistant to the hard wear imposed by repeated take-offs and landings of high performance fighter aircraft and helicopters, as well as the impact and wear imposed by contact with aircraft tailhooks and catapult cables. Naval vessels other than aircraft carriers, as well as commercial vessels and off-shore oil platforms, also have flight decks for helicopters or short take-off aircraft, and for which a durable, weather resistant non-slip coating would be useful.
In each case, flight operations at sea under varying weather conditions demand a durable, non-slip coating to prevent disasters.
The conventional weather resistant coating systems described above do not provide a coating that is thick enough to hold the large aggregates typically needed to provide a non-slip surface suitable for naval and commercial marine aircraft operations. They also do not provide sufficient resistance to wear under the harsh conditions of aircraft operations at sea. Acrylic, silicone, and urethane coatings simply are not able to withstand 12-18 months of naval flight deck operations.

Finally, these compositions and their precursors have a volatile organics content (VOC) that is unacceptably high. One of the characteristics desired of non-slip coatings for naval and commercial marine flight decks is that they be capable of being applied by personnel at sea if necessary, in the event that the existing coating becomes damaged and needs repair or replacement. For health and environmental reasons, low or zero VOC coating compositions are necessary.
Epoxy resins have three membered epoxy or oxirane rings attached to aliphatic, cycloaliphatic, or aromatic backbones. The epoxy rings provide the ability to react with a variety of substrates, giving these resins great versatility. When reacted with curing agents, epoxies form thermosetting resins having a tight cross-linked polymer network. They are tough, and they have good adhesion to a variety of substrates, high corrosion/chemical resistance, and good dielectric properties. Epoxy resins also have low shrinkage upon curing, and can be processed and cured under a variety of conditions. They are used commercially in a wide variety of applications, such as in coatings, laminates and composites, tooling, moulding and casting, construction, and as bonding agents or adhesives.

Epoxy resins may be either one-part or two-part epoxies. Two-part epoxies harden when blended with a hardener. Two-part epoxy resin systems do not exhibit the level of VOC associated with the other resin systems discussed above. They are extremely durable and hard-wearing, and are capable of withstanding the hard use associated with an aircraft flight deck.

These two part epoxy resins may be either aromatic (e.g., made from epichlorohydrin and bisphenol A) or aliphatic (e.g., where an aliphatic polyol, such as glycerol, has been substituted for the bisphenol A), or cycloaliphatic (e.g., where the aromatic rings in the bisphenol A have been largely or completely hydrogenated), or where the two carbons forming the epoxide group also form another cycloaliphatic ring). One widely used liquid epoxy resin is produced by curing the liquid reaction product of excess epichlorohydrin and bisphenol A, often described as the diglycidyl ether of bisphenol A, or DEGBPA. DEGBPA is a supercooled liquid, and can be prepared by the caustic catalysed nucleophilic ring opening of the epoxide group on the epichlorohydrin by the phenolic hydroxy, followed by dehydrohalogenation for reconversion to an epoxide. Excess epichlorohydrin is used in DEGBPA production to minimise high molecular weight species.

Solid epoxy resins are also available, and may have structures similar to that of DEGBPA, but with a higher degree of polymerisation. They can be prepared by a method analogous to that used for preparation of DEGBPA, but using amounts of epichlorohydrin and bisphenol A in closer to a 1:1 ratio, and using a stoichiometric amount of NaOH (the "Taffy" process). Alternatively, the catalytic "chain extension" or "advancement" of liquid DEGBPA can be used to prepare solid epoxies by reacting the DEGBPA with additional bisphenol A. Relatively selective catalysts are used, which are typically basic inorganic reagents, such as NaOH, KOH, Na₂CO₃, or LiOH, or amines or quaternary ammonium salts. Because these systems require additional bisphenol A to extend the chain, they can be sold as precatalysed liquid epoxy resins, where the customer adds bisphenol A and allows the mixture to polymerise to the desired molecular weight.

A technique similar to the "advancement" technique of reacting DEGBPA with bisphenol A can be used to prepare "phenoxy resins," thermoplastic polymers having molecular weights higher than those of conventional epoxy resins. These resins lack a terminal epoxide functionality. They are thermally stable, and can be fabricated by conventional thermoforming techniques. Their repeat unit is basically the same as an advanced epoxy resin. They are prepared by either reacting high purity bisphenol A with epichlorohydrin in a 1:1 molar ratio, or by reacting high purity DEGBPA and bisphenol A in a 1:1 molar ratio.

Epoxy resins suitable for use in coating applications are often prepared by esterifying the epoxy terminal groups or pendant hydroxyl groups on the polymer chain with fatty acids ("epoxy esters"). The resulting epoxies are used for air-dried, protective, and decorative coatings.

Multifunctional epoxies, such as epoxy phenol novolac resins (EPN) and epoxy cresol novolac resins (ECN), are also used commercially as epoxy resins. EPN resins are made by glycidylation of phenol-formaldehyde condensates obtained by the acid catalysed condensation of phenols with formaldehydes (also known as novolacs). Reaction with excess epichlorohydrin followed by dehydrohalogenation yields a novolac having glycidylated phenolic hydroxy moieties. ECN resins are prepared by an analogous method, using cresol in place of phenol in the condensation polymer with formaldehyde. ECN resins in particular have improved thermal and chemical resistance properties when cured. Another type of multifunctional epoxy resin is the aromatic glycidyl amine resin. Examples include the resin obtained by glycidylation of aminophenols, such as by reaction of p-aminophenol with excess epichlorohydrin, and the resin obtained by glycidylation of methylenedianiline (MDA). Conditions of these reactions must be carefully controlled to avoid rapid polymerisation and resulting side reactions.

Cycloaliphatic epoxy resins can be obtained by the epoxidation of cycloolefins with peracids like peracetic acid. These resins can also be obtained by hydrogenating phenolic reactants such as bisphenol A, and forming glycidyl ethers therefrom.

In order to form a solid, insoluble, intractable thermoset, the epoxy resin must be cured or cross-linked. Curing occurs via two different mechanisms, catalytic curing and coreactive curing, either or both of which may contribute to the curing of a particular epoxy resin system.
Catalytic curing occurs when a catalytic curing agent, usually a Lewis base or Lewis acid, initiates epoxy resin homopolymerisation. Tertiary amines, such as benzyldimethylamine or 2,4,6-tris(dimethylaminoethyl)phenol, are commonly used Lewis base catalysts. These catalysts are believed to function by reacting with the methylene carbon of the epoxy group to form an intermediate zwitterion, which then abstracts a hydrogen from a hydroxy moiety. The resulting alkoxide begins the polymer chain, reacting with epoxy moieties and generating additional alkoxide at the other end of the polymer chain. Boron trihalides are commonly used Lewis acid catalysts, and are often complexed with amines. These amine complexes are believed to thermally dissociate to form a proton that reacts with the epoxy group, initiating curing. Epoxy resins may also be cured with cationic photoinitiators, such as aryldiazonium salts, diaryliodonium salts, and onium salts of Group VIa elements.
Coreactive curing occurs in the presence of a curing agent that acts as a comonomer or cross-linking agent during the curing process. Typically, the curing agent reacts with the epoxy and/or hydroxyl pendent groups on the polymer backbone. Coreactive curing agents typically have active hydrogen atoms, e.g., phenols, alcohols, thiols, primary and secondary amines, and carboxylic acids. Primary amines are the most widely used and available coreactive curing agents, and react twice as fast as secondary amines.

Aliphatic polyamines can cause dermatitis if improperly handled, and have a short working pot life. As a result, they are sometimes reacted with epoxy compounds to form adducts that are easier to handle and have longer pot lives. For example, diethylenetriamine (a common commercial amine curing agent) can be reacted with ethylene oxide to form a mixture of mono- and dihydroxyethyldiethylenetriamine, which has a longer pot life and fewer dermatitic effects.

The largest single use of epoxy resin in the U.S. is in coating applications, and two part amine cured systems have been used for marine and other maintenance coatings where corrosion resistance is required. Curing of these resins typically takes about 7 days.

However, use of conventional aromatic epoxy systems in coating applications where the coating will be exposed to weather can result in a "chalking" phenomenon. When conventional aromatic epoxy systems are exposed to ultraviolet radiation and moisture, as occurs frequently during naval operations, the epoxy polymer degrades, resulting in a whitening of the coating and a powdering of the polymer surface, which turns a camouflaging "battleship grey" coating white. Chalking has generally been found to occur over a 3 to 12 month period, depending on the type of curing system used in the epoxy resin.

While it may be possible to retard the chalking process to some extent by blending into the epoxy resin ultraviolet absorbing additives, or by blending more light stable resins, such as acrylics or silicones, into the epoxy, these approaches are not particularly desirable, since ultraviolet light absorbing additives are expensive, and since inclusion of other resins can compromise the excellent physical and chemical resistance of the epoxy resin system.

Another method of attempting to avoid chalking is to use a cycloaliphatic epoxy resin system. One way of doing this is to hydrogenate the aromatic rings of the epoxy. However, it has been determined that hydrogenated ring epoxy resins and curatives having a high percentage of free primary amines are not successful in solving chalking problems. One reason is that when these hydrogenated epoxies are used with conventional primary amine hardeners, there is a residual excess of amine (or "blush") formed on the surface of the coating. This blush then reacts with water and atmospheric carbon dioxide in the presence of ultraviolet radiation to form a carbamate on the coating, giving rise to a whitening of the coating which is undesirable for many of the same reasons that chalking is undesirable.

In fact numerous attempts to avoid the blushing phenomenon, ranging from using a fairly lengthy prereaction period to using primary amine curatives to reaction with an aminopiperazine accelerator in addition to the primary amine curatives have not proved satisfactory.

As a result, hydrogenated epoxies have been used with the widely available primary amine-containing hardeners for applications where they will not come into contact with both UV radiation and moisture, i.e., in interior applications. They have not been considered suitable for use in exterior applications, and certainly not in marine applications. A primary amine hardener is used in these interior applications because it will not yellow, and therefore will not distort the pastel or other colours used in interior applications, which can include use as flooring and/or wall coatings. Often these applications require that the resin not yellow upon exposure to fluorescent lighting.

It would be therefore desirable in the art to provide an epoxy coating system that:
cures into a tough, thermoset resin of sufficient thickness to hold non-slip aggregates;
does not chalk or blush;
is resistant to chemical attack and corrosion;
has a low VOC content, and can be applied without undue health or environmental risks;
does not require, but can be used with, ultraviolet absorbing compounds and light stable resins; and
is sufficiently durable to withstand use as the coating on flight decks without having to be replaced for at least about 12-18 months of aircraft flight deck operations.

### SUMMARY OF THE INVENTION

These and other objects and advantages are achieved by the present invention, which is directed to an epoxy resin coating system having resistance to chalking and blushing that is improved over conventional epoxy resin systems. The epoxy resin system used in the present invention is a two part system containing a nonaromatic epoxy component and an amine hardener component that is primarily composed of secondary and tertiary amine compounds, and that contains minimal amounts of primary amine compounds.

The epoxy component of the coating system contains aliphatic or cycloaliphatic epoxy polymers. The polymers may be linear or branched, multifunctional, liquid or solid polymers, but generally contain alicyclic rings. Typically, over 80% of the rings present in the polymer are nonaromatic. Additionally, the epoxy component may contain non-aromatic epoxy diluents designed to modify resin functionality, viscosity, flexibility and speed of cure. Specific diluents include tri-methylol ethane tri-glycidyl ether.

The hardener component of the coating system is primarily composed of secondary amine compounds and tertiary amine compounds, and contains very limited amounts, if any, of primary amine compounds. As used herein, primary amine compounds are linear or branched, aliphatic or aromatic, amines, including polyamines, having two or more primary amine moieties. Tertiary amine compounds are aromatic or aliphatic amines having no primary or secondary amine moieties. Secondary amine compounds are linear or branched, aliphatic or aromatic, amines having at least one secondary amine or amide moiety and that are not primary amine compounds or tertiary amine compounds as defined herein. The primary amine compounds that are limited or excluded from the present invention tend to have relatively low molecular weights, generally below 100, more particularly below about 50.

Generally, the hardener component may contain between about 40 wt% and about 100 wt% secondary amine compounds and tertiary amine compounds. The content of primary amine compounds in the hardener component is generally limited to less than about 5 wt%, based on the weight of the hardener composition, and desirably less than about 1 wt% of the hardener. In particular, the hardener can comprise at least one compound having an imidazole terminal group and additional compounds, such as polyamides or amidoamines, such that the total content of secondary amine compounds is within the above parameters.
The epoxy coating system of the present invention can be mixed and applied at ambient temperatures, and will cure to an intractable, solid, insoluble, durable coating that can be applied at suitable thicknesses to retain non-slip aggregates dispersed in the coating, and that can withstand the corrosive effects of exposure to sea water.

The coating that results from curing of the coating system, which itself also forms a part of the present invention, is capable of withstanding repeated take-offs and landings of aircraft, and contact with tailhooks and catapult cables for periods of at least 12-18 months.

Because a nonaromatic epoxy polymer is used, the coating is able to withstand long term exposure to ultraviolet radiation and moisture without chalking, thereby increasing the durability of the coating. Moreover, because minimal quantities of primary amines are used, the system of the present invention does not form a whitening blush on the surface of the coating in the presence of moisture. While the coating system of the present invention will yellow, this does not noticeably alter the colour of the coating, which is typically a "battleship grey," so that the camouflaging effects of the coating are not compromised. Because the coating is used in an exterior application and used to coat a camouflaging grey or black surface, the aesthetic effects of yellowing are immaterial.

The present invention can be more clearly understood by referring to the following detailed description, which is not intended to limit the scope of the invention in any way.

### DETAILED DESCRIPTION OF SPECIFIC EMBODIMENTS

The present invention relates to a two-part curable epoxy coating system, one part of which is an epoxy polymer. The epoxy polymer may be linear or branched, may be mono- or multifunctional, and may be a liquid or solid epoxy polymer. However, the aromaticity of the epoxy polymer is limited to less than or equal to about 20 % of the rings in the polymer. The lower the aromaticity of the epoxy polymer, the better, since lower aromaticity provides increased resistance to chalking. Suitable epoxy polymers generally have an epoxy number in the range of about 100 to about 1000 EEW (epoxide equivalent weight, defined as the weight of polymer in grams that contains one gram equivalent of epoxide).

While any epoxy polymer fitting the above constraints can be used, epoxides formed from hydrogenated diglycidyl ethers of bisphenol A described above have been found to be particularly suitable. Although the precise order and specific types of reaction are not critical to the practice of the present invention, it has been found convenient to use hydrogenated bisphenol compounds to prepare the epoxy polymer component. More particularly, in a first step, bisphenol A is hydrogenated under pressure in the presence of a catalyst to hydrogenate more than 99% of the aromatic rings, leaving less than 1 % unhydrogenated material. The hydrogenated bisphenol A is then epoxidized with epichlorohydrin in the presence of a Lewis acid. The resulting product is then dehydrohalogenated with caustic and washed to produce the final epoxy polymer, which desirably has a content of residual chlorides that is as low as possible in order to provide the best possible UV resistance properties.

Other epoxy polymers that can be produced by the process described above and used in accordance with the present invention include those in the 100 to 1000 EEW range, and may be liquid or solids based on bisphenol A, bisphenol F, or novolac chemistry. Additionally, these epoxy polymers can be blended with non-aromatic diluents which are compatible and modify viscosity, speed of cure, chemical resistance, etc., while not effecting UV resistance.

The hardener component of the epoxy system contains secondary amine compounds and optionally tertiary amine compounds, but contains very limited amounts, if any, of primary amine compounds. While not wishing to be bound by any theory, it is believed that the secondary amine compounds initiate the curing reaction by coreacting with the epoxy compounds. In the process, the secondary amine compounds are converted to tertiary amine compounds, which further accelerate curing by other secondary amine compounds, and by the partially reacted and unreacted epoxy compound itself. To achieve this effect without chalking or blushing, the amine hardener component can typically contain combinations of 0-100% by weight of polyamide or amidoamine and 0-100% of imidazole reaction products of ethylene amines with fatty acids or dimer acids; and optionally additive percentages 0-40% of tertiary amines and/or hydrogenated epoxy resin at 0-20%.

Suitable secondary amine compounds for use in the amine hardener component include those prepared from the TETA (triethylenetetramine): 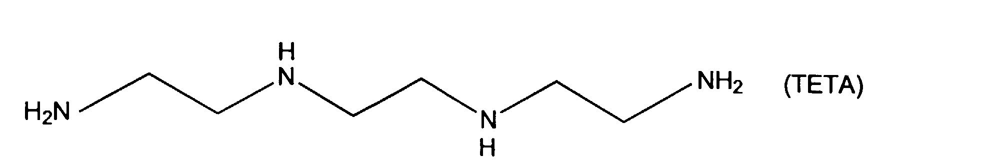 TEPA (tetraethylenepentamine): 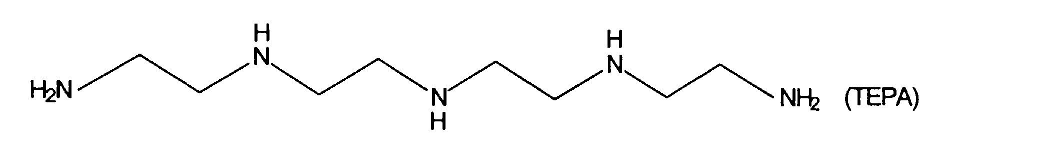 and PEHA (pentaethylenehexamine) families of primary amine compounds, in particular the reaction products of these amines with carboxylic acids to form carboxamides. Other amines and families of amines can be used, but the above families of amines have been found to be particularly suitable with respect to both cost and performance.

In particular, reaction products of amines of the above families of amines with fatty acids or dimer acids have been found to be suitable: 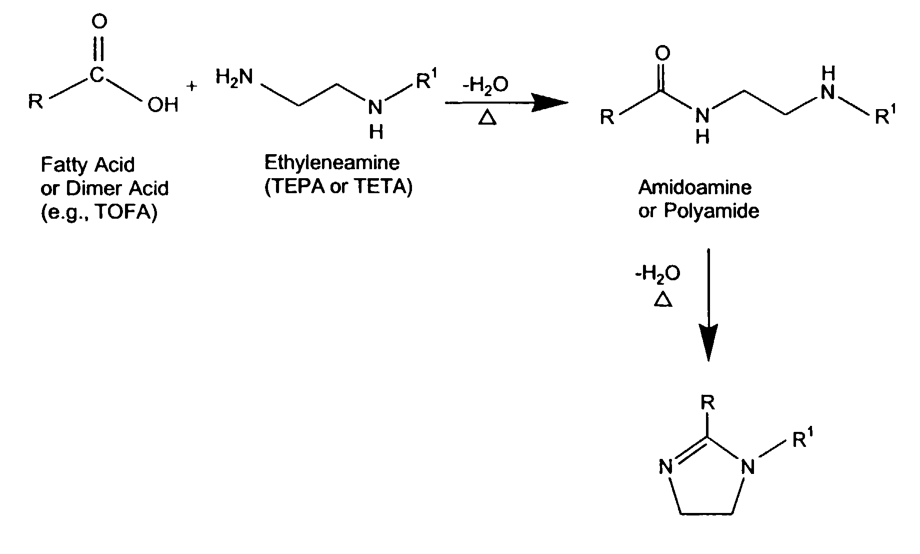 These fatty acids may include, but are not limited to, tall oil fatty acid (a mixture of linoleic and oleic acids) and/or vegetable oil fatty acids. Dimer acids can be formed by the cyclization of unsaturated acids:

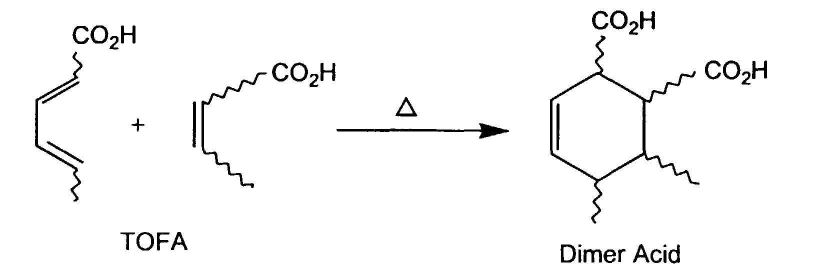

Reaction of amines, such as those in the families described above, with fatty acids generates polyamide and amidoamine epoxy curatives suitable for use in the hardener component of the present invention.

The amine hardener component typically form mixtures comprising an amount of an imidazole, with between about one and about three secondary amine moieties, two cyclic tertiary amine moieties and one primary amine moiety. Typically, the hardener composition contains the imidazole compound in amounts of at least about 50 wt% of the composition, and contains polyamide or amidoamine compounds having 3-5 additional secondary amine moieties in amounts of about 50 wt% or less of the hardener composition. The hardener composition typically contains less than about 1 wt% unreacted primary polyethylene amine. For example, an amine hardener component prepared by reacting TEPA and tall oil fatty acid can have the composition: 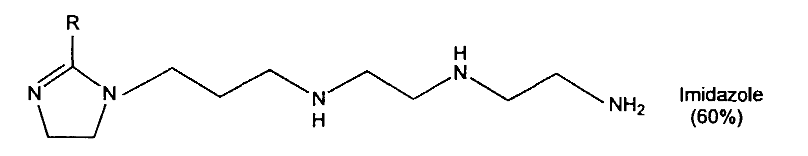 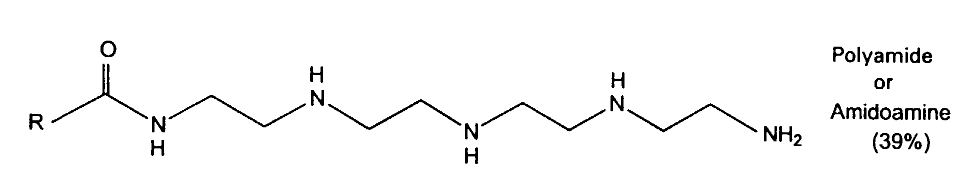 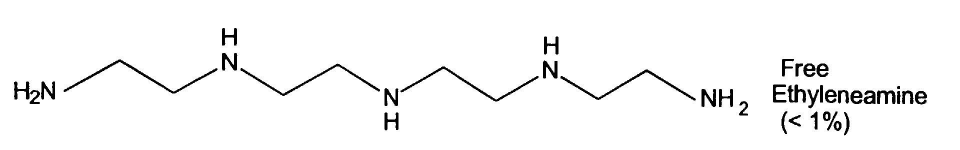 wherein the imidazole is present in an amount of around 60 wt%, the amidoamine is present in an amount of around 39 wt%, and the free ethylene amine is present in an amount less than 1 wt%. It is also possible to use compounds wherein all of the amine moieties are secondary amines, amides, or imidazole nitrogens.

A proportion of the total amines in the amine hardener composition may also be tertiary amine compounds, as described above. These tertiary amine compounds are believed to function as Lewis base catalysts and accelerate the coreaction with the secondary amine compounds, which can often be slow to cure. Suitable tertiary amine compounds that can be included in the amine hardener component include substituted phenolic amines, such as 2,4,6-tri(dimethylaminomethyl)phenol and dimethylaminomethylphenol. The proportion of tertiary amine compound in the amine hardener component is typically no more than about 40 wt%, based on the total weight of amines in the amine hardener component. Additionally, hydrogenated epoxy resins could be added to the hardener compositon at 0-20% by weight but is often not necessary for this invention to form adducts.

Other components may also be included in the coating system of the present invention, such as thixotropes, solvents, fillers, aggregates, fibers, etc., which may be included in the hardener component, the epoxy component, or both.

Thixotropes are included in amounts ranging from about 5 wt% to about 40 wt%, based on the total weight of the coating system. Suitable thixotropes include those suitable for epoxy coating systems in general, such as fibrous minerals (e.g., wollastonite), aramid fibers, particles or chips (such as KEVLAR), clays (such as bentonite, hectorite, smectite, attapulgite), amorphous fumed silicas (both untreated and surface treated), and waxes (such as polyamide waxes, hydrogenated castor oil).

Solvents can be included in amounts up to about 20 wt% based on the total weight of the coating system, and are typically selected from among those generally considered suitable for epoxy coating systems, such as xylene, methyl-n-amyl ketone, n-butanol, methyl-isobutyl ketone, propylene glycol monomethyl ether, propylene glycol monoethyl ether, AROMATIC 100 (petroleum hydrocarbon), toluene, and furfuryl alcohol.

Fillers can be included in amounts ranging from about 25 wt% to about 40 wt%, based on the total weight of the coating system. They function to extend the coating, thereby decreasing its cost of application. They also can function to provide nonslip properties to the coating. Suitable fillers include barium sulfate, silica, nepheline syenite, calcium carbonate, aluminum oxide, talc, etc.

Aggregates are also included to provide nonslip properties to the coating, and may be added in amounts ranging from about 30 wt% to about 50 wt%, based on the total weight of the coating system. Suitable aggregates include aluminum oxide, silicon carbide, slag abrasives, aluminum powder, etc.

The coating system of the present invention is typically prepared by mixing the nonaromatic epoxy polymer or the hardener component with one or more of the components described above, as well as optionally air release additives, pigments, and/or wetting additives. The epoxide component is kept separate from the amine hardener component until the coating system is to be applied. At that point, the amine hardener component is mixed with the epoxy component in an amount ranging from about 1 wt% to about 20 wt%, based on the total weight of the coating system. The resulting mixture is then applied to the surface to be coated within a time period of about 10 minutes to about 60 minutes from the time of mixing. The mixture may be rolled, brushed, or sprayed onto the surface to be coated, and allowed a sufficient time to cure, typically about 24 hours to about 3 days at 23.89°C (75°F). After curing, the coated surface can be used as intended, e.g., for marine or naval flight deck operations. While the coating applied according to the present invention will result in some yellowing of the dark grey non-skid deck surface, it will not chalk or blush, and can remain in use in the presence of moisture, including salt water, and ultraviolet radiation, for extended periods.

If desired, the coating system of the present invention can be blended with other compatible light resistant resin systems to obtain a hybrid coating. For example, acrylics, silicones, epoxy-silicones, and other compatible polymers can be blended with the coating system of the present invention in amounts up to about 40 wt% of the weight of the coating system.

The invention can be more clearly understood by referring to the following examples, which are intended to illustrate and not to limit the scope of the invention.

### EXAMPLES

The epoxy coating systems shown below were prepared according to the presently claimed invention (all percentages are in weight percent, based upon the total epoxy system).

| COMPONENT | EXAMPLE | | | | |
|---|---|---|---|---|---|
| | 1 | 2 | 3 | 4 | 5 |
| PART A | | | | | |
| | | | | | |
| PEP6180/Epalloy 5000/Eponex 1510¹ | 12 | 10 | 10 | 10 | 12 |
| | | | | | |
| Solvent | 5 | 7 | 7 | 7 | 5 |
| | | | | | |
| Fillers | 23.5 | 25 | 25 | 25 | 23.5 |
| | | | | | |
| Aluminium oxide | 47 | 43.5 | 43.5 | 43.5 | 47 |
| | | | | | |
| Pigments | 2 | 2 | 2 | 2 | 2 |
| | | | | | |
| Thixotropes | 4 | 6 | 6 | 6 | 4 |
| | | | | | |
| Additives | 0.5 | 0.5 | 0.5 | 0.5 | 0.5 |
| | | | | | |
| PART B | | | | | |
| | | | | | |
| Versamid 140² | 5 | | | | 5 |
| | | | | | |
| Genamid 235³ | | 4 | | | |
| | | | | | |
| Ancamide 2447⁴ | | | 4 | | |
| | | | | | |
| Ancamide 506⁵ | | | | 4 | |
| | | | | | |
| K54/EH-30/EH-50⁶ | 1 | 1 | 1 | 2 | 2 |
| | 1 | 2 | 3 | 4 | 5 |
| PART A | | | | | |
| | | | | | |
| Total | 100 | 100 | 100 | 100 | 100 |

| | | | | | |
|---|---|---|---|---|---|
| ¹ PEP 6180 is a hydrogenated epoxy resin produced by Pacific Epoxy Products; Epalloy 5000 is a hydrogenated epoxy resin produced by CVC Specialty Chemicals; Eponex 1510 is a hydrogenated epoxy resin produced by Shell Chemical. | | | | | |
| ² Versamid 140 is a polyamide produced by Henkel Products. | | | | | |
| ³ Genamid 235 is an amidoamine produced by Henkel Products. | | | | | |
| ⁴ Ancamide 2447 is an amidoamine produced by Air Products and Chemicals. | | | | | |
| ⁵ Ancamide 506 is an amidoamine produced by Air Products and Chemicals. | | | | | |
| ⁶ K54/EH50/EH30 are substituted phenol accelerators. | | | | | |

A typical manufacturing process for preparing these compositions includes:

### Part A

Step 1 - Add resin to mixing vessel and start mixing with high speed disperser.
Step 2 - Add solvents/additives/thixotrope; mix 30 minutes at high speed.
Step 3 - Add fillers and aggregates; mix 10 minutes to complete the batch.

### Part B

Step 1 - Add hardeners to mixing tank.
Step 2 - Mix 15 minutes to complete the batch.

The present invention having been thus described with respect to its particular embodiments, it will be apparent to those of skill in the art that various modifications and variations of the invention will also be within the scope of the appended claims, and of equivalents thereto.

## Claims

1. A two-part epoxy resin coating system, comprising:
(a) an epoxy component comprising an aliphatic or cycloaliphatic epoxy compound; and
(b) a hardener component comprising an amine compound selected from the group consisting of secondary amine compounds, tertiary amine compounds, and mixtures thereof,
tertiary amine compounds being defined as aromatic or aliphatic amines having no primary or secondary amine moieties,
secondary amine compounds being defined as linear or branched, aliphatic or aromatic, amines having at least one secondary amine or amide moiety and that are not tertiary amine compounds or primary amine compounds,
primary amine compounds being defined as linear or branched, aliphatic or aromatic, amines, including polyamines, having two or more primary amine moieties.

2. A two-part epoxy resin coating system as claimed in claim 1 in which said hardener component comprises between about 40% and 100wt% of said amine compound selected from the group consisting of secondary amine compounds, tertiary amine compounds, and mixtures thereof

3. An epoxy resin coating system according to claim 1 or claim 2, wherein any primary amine compounds are present in amounts below about 5 wt% based on the weight of the hardener component.

4. An epoxy resin coating system according to claim 3, wherein any primary amine compounds are present in amounts below about 1 wt%.

5. An epoxy resin coating system according to any of claims 1 to 4, wherein the amine hardener composition (b) comprises a tertiary amine compound.

6. An epoxy resin coating system according to any preceding claim, wherein the secondary amine compounds are present in an amount of between about 70 wt% and about 100 wt% of the amine hardener composition (b).

7. An epoxy resin coating system according to any preceding claim, wherein the system is curable at temperatures ranging from about 4.44 °C (40 °F) to about 65.55°C (150 °F) without the need for a post cure step or an elevated curing schedule.

8. An epoxy resin coating system according to any preceding claim, wherein the epoxy component (a) is present in an amount ranging from about 80 wt% to about 99 wt%, and wherein the hardener component (b) is present in an amount ranging from about 1 to about 20 wt%, based on the weight of the total resin coating system.

9. An epoxy resin coating system according to any preceding claim, wherein the epoxy component comprises, based on the weight of the total resin coating system, about 5 wt% to about 40 wt% epoxy compound, about 0.5 wt% to about 5 wt% thixotropes, up to about 20 wt% solvents, about 25 wt% to about 40 wt% fillers, and about 30 wt% to about 50 wt% aggregates.

10. An epoxy resin coating system according to any preceding claim, wherein the epoxy component (a) comprises a hydrogenated epoxy resin having cyclic hydrocarbyl moieties, of which at least about 80% are nonaromatic.

11. An epoxy resin coating system according to any preceding claim, wherein the epoxy component (a) has an epoxy content in the range of about 100 to about 1000 eew.

12. An epoxy resin coating system according to any preceding claim, wherein the epoxy component (a) comprises a blend of the aliphatic or cycloaliphatic epoxy compound with another compatible polymer.

13. An epoxy resin coating system according to claim 12, wherein the compatible polymer is selected from the group consisting of acrylic polymers, silicone polymers, epoxy-silicon polymers, and mixtures thereof.

14. An epoxy resin coating system according to claim 12 or claim 13, wherein the compatible polymer is present in an amount greater than 0 wt% and less than or equal to about 40 wt%, based upon the weight of the epoxy component.

15. An epoxy resin coating system as claimed in any preceding claim in which the hardener component comprises at least about 50 wt% of an imidazole having between about one and about three secondary amine moieties, two cyclic tertiary amine moieties, and one primary amine moiety.

16. An epoxy resin coating system according to claim 15, wherein the hardener component further comprises about 50 wt% or less of compounds selected from the group consisting of polyamides and amidoamines having between about 3 and about 5 secondary amine moieties.

17. An epoxy resin coating system according to claim 16, wherein the hardener component has less than about 1 wt% polyethylene amine.

18. An epoxy resin coating system, as claimed in any preceding claim in which the hardener component comprises the reaction product of
(1) a triethyleneaminetetramine, a tetraethylenepentamine, a pentaethylenehexamine, or a mixture thereof, with
(2) a fatty acid or dimer acid.

19. An epoxy resin coating system as claimed in claim 18, wherein the fatty acid is a tall oil fatty acid or a vegetable oil fatty acid.

20. An epoxy resin coating obtained by mixing the epoxy component (a) and the hardener component (b) of the epoxy resin coating system of any preceding claim and subjecting this mixture to conditions sufficient to form a solid, intractable, insoluble resin.

21. An epoxy resin coating as claimed in claim 20, wherein the conditions include a temperature ranging from about 4.44 °C (40 °F) to about 65.55°C (150 °F).

22. A nonslip, weather and ultraviolet resistant coating comprising:
(a) a matrix phase comprising an aliphatic epoxy resin cured with a secondary or tertiary amine hardener; and
(b) a dispersed phase comprising particles selected from the group consisting of aramid particles, aramid fibers, mineral particles, and mineral fibers.

23. A method of providing a durable, weather resistant, non-slip coating to a marine aviation flight deck, comprising the steps of:
(1) mixing
(a) an epoxy component comprising an aliphatic or cycloaliphatic epoxy compound with
(b) a hardener component comprising an amine compound as specified in Claim 1 or any of claims 2 to 19 and with
(c) non-slip aggregates;
(2) applying the resulting mixture to the surface of a marine aviation flight deck; and
(3) allowing the mixture to cure.

24. A method as claimed in claim 23, wherein the non-slip aggregates (c) are premixed with the epoxy component (a) or the hardener component (b) or both.

25. The method as claimed in claim 23 or claim 24, in which said hardener component comprises between about 10% and 100wt% of said amine compound selected from the group consisting of secondary amine compounds, tertiary amine compounds, and mixtures thereof.
